# EUROPEAN PATENT SPECIFICATION

(11) **EP 3 109 874 B1**
(45) Date of publication and mention of the grant of the patent: **20.12.2017**
(21) Application number: 16176278.6
(22) Date of filing: 24.06.2016
(51) Int. Cl.: H01G 2/06, H01G 9/025, H01G 9/035

(54) **CAPACITOR HOUSING WITH SPACER FOR MOUNTING ON PRINTED CIRCUIT BOARD (PCB)**
KONDENSATORGEHÄUSE MIT ABSTANDHALTER FÜR MONTIERUNG AUF EINE LEITERPLATTE (PCB)
BOITIER DE CONDENSATEUR AVEC ESPACEUR POUR LE MONTAGE SUR UNE PLAQUE À CIRCUIT IMPRIMÉ (PCB)

(30) Priority: 24.06.2015 US 201562183897 P
(43) Date of publication of application: 28.12.2016
(73) Proprietor: Kemet Electronics Corporation, Simpsonville, SC 29681 (US)
(72) Inventor: Wright Mark, Weymouth Dorset DT4 9GH (GB); Candy Gavin, Weymouth Dorset DT4 9GH (GB)
(74) Representative: Goodman, Simon John Nye

(56) References cited:
- EP-A2- 0 038 946
- GB-A- 638 600
- US-A1- 2010 267 252

## Description

### CROSS-REFERENCE TO RELATED APPLICATIONS

### BACKGROUND

The present invention relates to a wound press fit capacitor. More specifically, the present invention relates to a wound press fit capacitor comprising a spacer thereby eliminating any separation between the body of the capacitor and a printed circuit board with the capacitor mounted thereon. US2010/0267252 discloses an electrolytic capacitor comprising a housing with a sealing cover plate, anode and cathode lead wires projecting from said sealing cover plate and electrically connected to press-fit pins suitable for solder-less connection to a PCB, and a terminal plate acting as a spacer.

Wound capacitors are widely used throughout industry and are well known to those of skill in the art. Wound capacitors are typically encased in a housing, typically a cylindrical housing, wherein a deck is engaged with the housing to seal the components within the housing. Press fit pins extend from the deck in an arrangement suitable to mate with sockets of the printed circuit board. The press fit pins include a stand-off and the stand-off prohibits the capacitor body from sitting flush on the printed circuit board. Due to the separation between the capacitor and printed circuit board the capacitor attachment is insecure and may become dislodged.

There have been many efforts to redesign printed circuit boards and wound capacitors to alleviate the problems of dislodging but none have proven satisfactory. Provided herein is a solution which allows the capacitor to be securely mounted while minimizing separation between the capacitor body and printed circuit board thereby providing a stable engagement.

### SUMMARY OF THE INVENTION

It is an object of the invention to provide an improved capacitor.

It is another object of the invention to provide a wound capacitor encased in a housing wherein a spacer is attached to the housing and the spacer allows the body of the capacitor to be in contact with a printed circuit board when mounted to the printed circuit board.

A particular feature of the claimed invention is the ability to provide an improved capacitor with minimal alteration of manufacturing facilities and processes.

These and other embodiments, as will be realized, are provided in a capacitor comprising a housing and a wound capacitive couple in the housing wherein the wound capacitive couple comprises an anode with a dielectric thereon, a cathode, an electrolyte between the cathode and the dielectric, an anode lead in electrical contact with the anode and a cathode lead in electrical contact with the cathode. A deck is secured to the housing and encases the wound capacitive couple in the housing. An anode press fit pin is on the deck and in electrical contact with the anode lead wherein the anode press fit pin comprises an anode riser and an anode compression pin extending from the anode riser opposite the deck. A cathode press fit pin is on the deck and in electrical contact with the cathode lead wherein the cathode press fit pin comprises a cathode riser and a cathode compression pin extending from the cathode riser opposite the deck. A spacer is attached to the housing wherein the spacer comprises a central void wherein the anode press fit pin and cathode press fit pin extend through the void and wherein said spacer extends away from the deck.

### BRIEF DESCRIPTION OF FIGURES

Fig. 1 is side schematic view of an embodiment of the invention.
Fig. 2 is a cross-sectional schematic view of an embodiment of the invention.
Fig. 3 is a bottom perspective schematic view of an embodiment of the invention.
Fig. 4 is a bottom perspective schematic view of a spacer of the invention.
Fig. 5 is a side schematic view of a spacer of the invention.
Fig. 6 is a side schematic cross-sectional view of a spacer of the invention.
Fig. 7 is a top perspective schematic view of an embodiment of the invention.
Fig. 8 is a schematic perspective representation of a partially wound capacitive couple.

### DESCRIPTION

The instant invention is related to an improved capacitor and electronic device comprising the improved capacitor. More specifically, the present invention is related to a wound capacitor contained in a housing wherein the housing can sit flush on a printed circuit board when mounted thereon.

The invention will be described with reference to the figures which form an integral non-limiting component of the disclosure. Throughout the figures similar elements will be numbered accordingly.

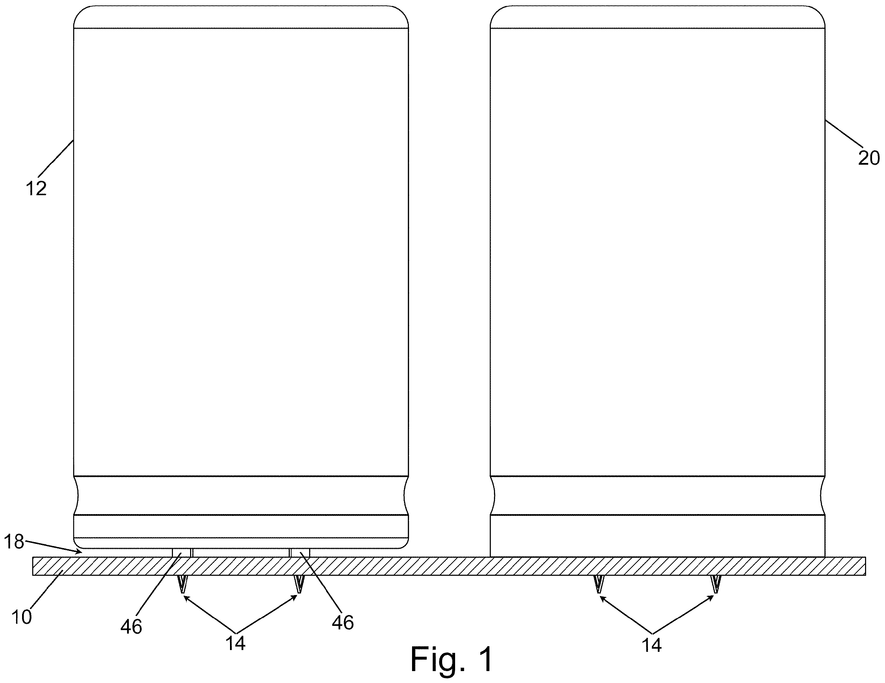

The advantage of the invention will be described with reference to Fig. 1. In Fig. 1, a printed circuit board, 10, of an electronic device is illustrated comprising two capacitors. A prior art capacitor body, 12, comprises press fit pins, 14, with at least one of each polarity extending from the capacitor body. A gap, 18, is present between the prior art capacitor body and the printed circuit board due to the stand- off distances caused by the riser, 46, as will be more fully discussed herein. An inventive capacitor, 20, is mounted with no gap and the riser of the press fit pins are therefore not visible.

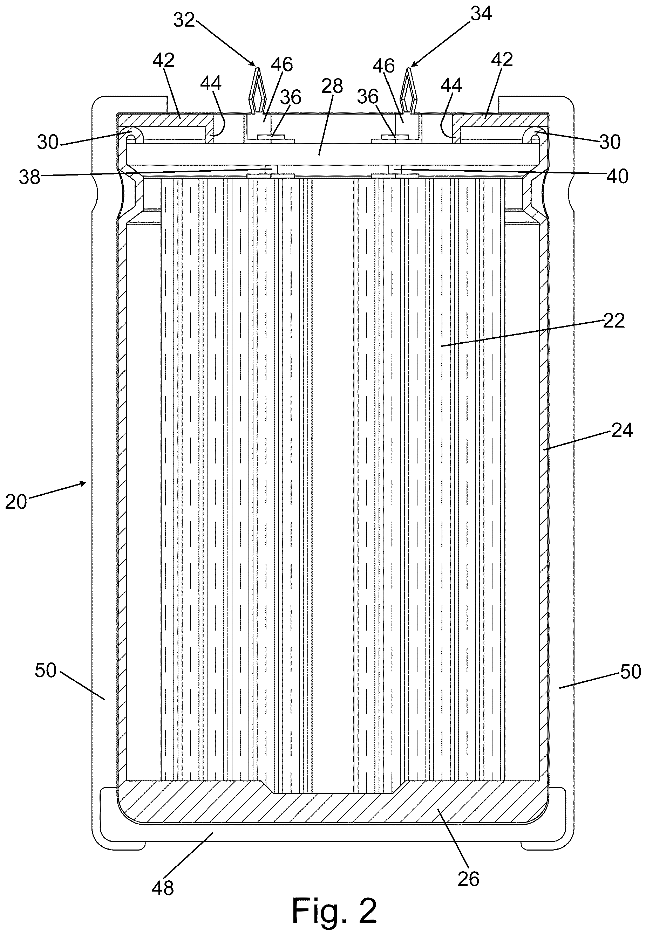

An embodiment of the invention will be illustrated with reference to Fig. 2 wherein a capacitor, 20, is illustrated in cross-sectional schematic view. A capacitive couple, 22, comprising an anode and cathode separated by a dielectric as will be more fully described herein is contained within a housing, 24. The housing is preferably a cylinder with a sealed bottom, 26, and an open top wherein the top is sealed with a deck, 28, preferably by a crimp joint, 30, wherein a portion of the housing is deformed to form a seal thereby physically restraining the deck between structural components of the housing. The spacer extends the capacitor body which is defined as the combination of the housing, the spacer and optionally the sleeve thereon. At least one anode press fit pin, 32, and at least one cathode press fit pin, 34, are attached to the deck, such as by rivets, 36. A rivet forms an electrical connection between the anode press fit pin and an anode lead, 38, which is in electrical contact with the anode of the capacitive couple. A second rivet forms an electrical connection between the cathode press fit pin and cathode lead, 40, which is in electrical contact with the cathode of the capacitive couple. A spacer, 42, is secured to the housing at the crimp joint and a lip, 44, of the spacer engages the deck. The spacer extends outward relative to the deck and therefore minimizes, and preferably eliminates, the gap between the capacitor body and printed circuit board. The height of the spacer, as measured from the deck, is preferably no more than the height as the riser, 46, of the press fit pin measured from the deck. Even more preferably, the height of the spacer is approximately the same as the height of the riser as measured from the deck. The height of the spacer can be slightly higher than the height of the riser as measured from the deck as long as the height does not impede the compression pin from fully engaging with the socket of the printed circuit board. An end disk, 48, covers the sealed bottom of the housing and a sleeve, 50, encases the capacitor extending partially around the riser. The sleeve is preferably a heat-shrink tube wherein the capacitor can be inserted therein and the sleeve heated to conform to the surface of the housing.

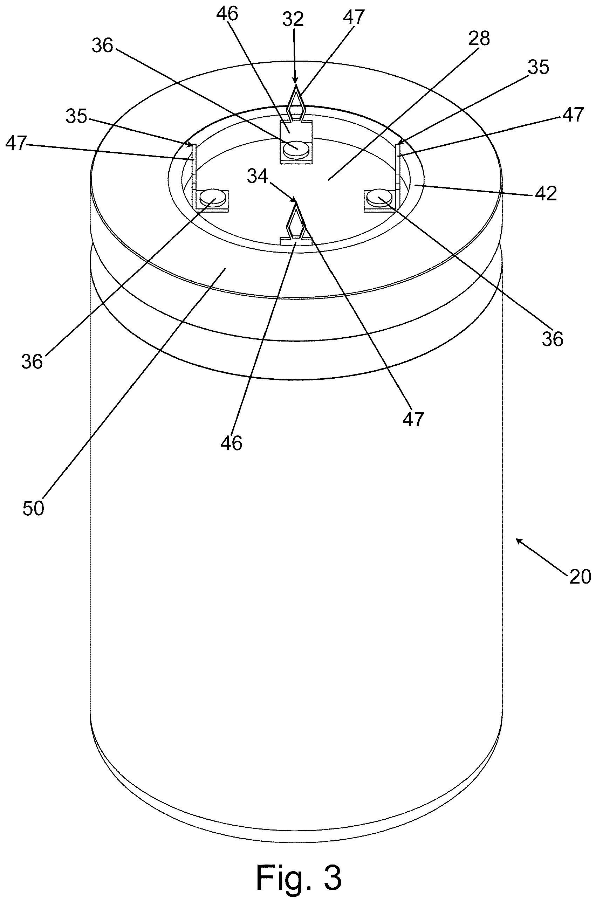

An embodiment of the invention is illustrated in bottom perspective schematic view in Fig. 3 wherein the capacitor, 20, comprises at least one anode press fit pin, 32, and at least one cathode press fit pin, 34, attached to the deck, 28, by a rivet, 36. Alternate press fit pins, 35, may be independently considered an active press fit pin which are connected to an anode or cathode for additional electrical connectivity to the printed circuit board, or they may provide no electrical function and are provided to physically secure the capacitor to the printed circuit board and therefore provide a mechanical function and are referred to herein as passive press fit pins. Each press fit pin has a riser, 46, with a compression pin, 47, extending therefrom wherein the compression pin is resistively received in a socket. The spacer, 42, is a component of the capacitor body thereby extending the capacitor body beyond the housing to allow the capacitor body to rest on the deck. The spacer preferably extends approximately the same distance the riser extends from the deck thereby allowing the press fit pin to be firmly received by a socket on the printed circuit board unimpeded as illustrated in Fig. 1. The sleeve, 50, secures the spacer to the capacitor and insulates the housing.

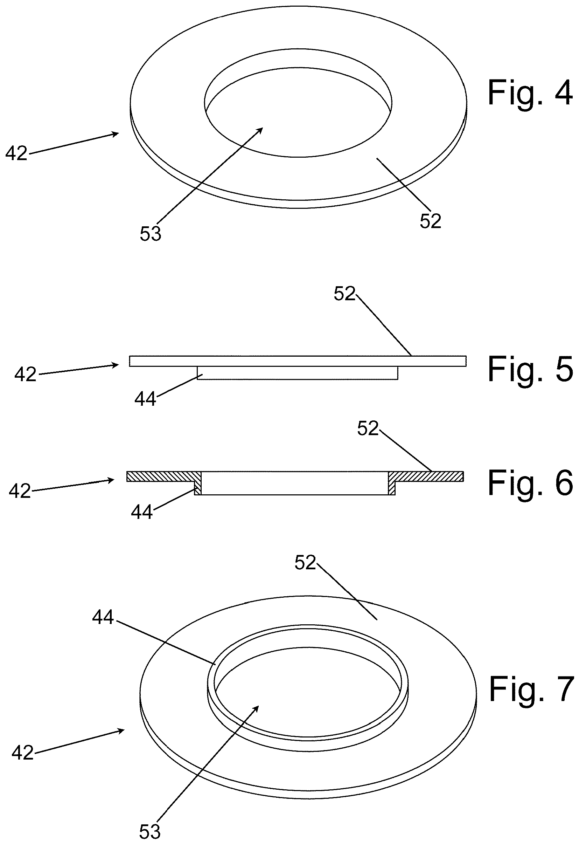

An embodiment of the invention will be described with reference to Figs. 4-7 wherein the isolated spacer is illustrated schematically. The spacer is illustrated in bottom perspective view in Fig. 4, in schematic side view in Fig. 5, in cross-sectional view in Fig. 6 and in top perspective in Fig. 7. The spacer, 42, comprises a spacer body, 52, with a central void, 53, suitable for extension of the press fit pins there through. The general shape of the body is preferably the same as the external shape of the housing with round being most preferred for manufacturing convenience. A lip, 44, extends from a face of the spacer body a height sufficient to contact the deck and therefore the spacer engages the deck by contact with the deck when installed, as illustrated elsewhere herein, thereby providing structural support to the spacer. The spacer is preferably formed of a material which is not electrically conducting.

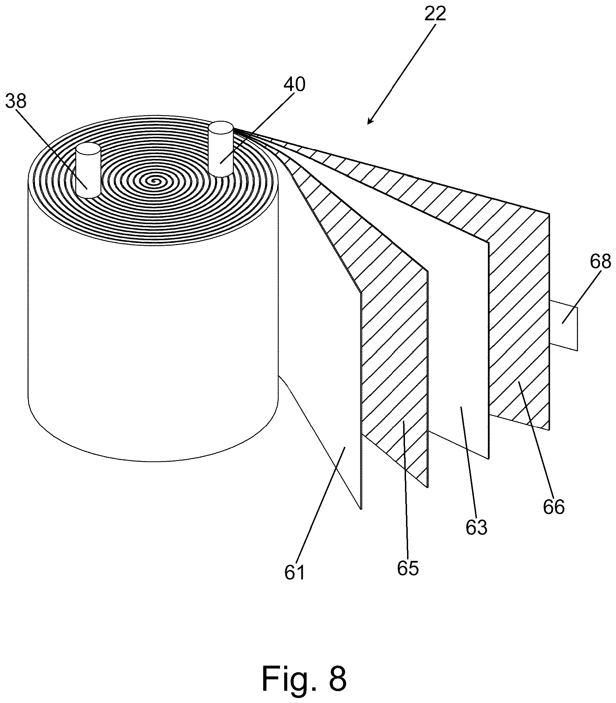

An embodiment of the invention will be described with reference to Fig. 8 wherein a partially wound capacitive couple is illustrated schematically. In Fig. 8, the capacitive couple, generally represented at 22, comprises an anode foil, 61, with a formed dielectric thereon. A formed dielectric is defined herein as a thicker dielectric than native dielectric typically present from ambient oxidation. The cathode foil, 63, is separated from the anode foil by separators, 65 and 66, wherein the separator is a porous lattice with electrolyte extending there through wherein the electrolyte is in electrical contact with the cathode foil. A closure, 68, such as an adhesive strip or the like, maintains the wound capacitor in the wound state for preparation of the electrolyte and assembly. Leads, 38 and 40, are separately in electrical contact with the anode foil and cathode foil.

The anode is a conductor, preferably a metal, and more preferably a valve metal, with a dielectric thereon preferably in the form of a foil. While not limited thereto the dielectric is preferably an oxide of the anode metal. Particularly preferred anodes are selected from the group consisting of tantalum, aluminum, niobium, titanium, zirconium, hafnium, alloys of these elements and conductive oxides thereof such as NbO. Most preferably, the anode is aluminum.

The dielectric is a non-conductive layer which is not particularly limited herein. The dielectric may be a metal oxide or a ceramic material. A particularly preferred dielectric is the oxide of the anode material due to the simplicity of formation and ease of use. The dielectric layer is preferably an oxide of a valve metal as further described herein. The dielectric is preferably formed by dipping the anode into an electrolyte solution, referred to as a forming electrolyte, and applying a positive voltage to the anode. Forming electrolytes for the oxide formation are not particularly limited herein but exemplary materials can include ethylene glycol; polyethylene glycol dimethyl ether as described in U.S. Pat. Nos. 5,716,511; alkanolamines and phosphoric acid, as described in U.S. Pat. Nos. 6,480,371; polar aprotic solvent solutions of phosphoric acid as described in U.K. Pat. No. GB 2,168,383 and U.S. Pat. No. 5,185,075; complexes of polar aprotic solvents with protonated amines as described in U.S. Patent No. 4,812,951 or the like. Electrolytes for formation of the dielectric on the anode including aqueous solutions of dicarboxylic acids, such as ammonium adipate, are also known. Other materials may be incorporated into the dielectric such as phosphates, citrates, etc. to impart thermal stability or chemical or hydration resistance.

The cathode is not particularly limited herein and may be in the form of a meal foil or a metal coating in some embodiments. Metals are preferable and, in one embodiment, the cathode foil may comprise the same material as the anode foil except the cathode preferably lacks formed dielectric.

The separator is not particularly limited herein. Exemplary materials for demonstration of the invention include nonwoven fabric containing cellulose, kraft, polyethylene terephthalate, polybutylene terephthalate, polyphenylene sulfide, nylon, aromatic polyamide, polyimide, polyamide-imide, polyether imide, rayon, glass and the like.

The electrolyte may comprise a solid electrolyte, a liquid electrolyte or a combination thereof. Particularly preferably solid electrolytes are selected from manganese dioxide and conductive polymer. A particularly preferred conductive polymer is selected from polythiophene, polyaniline, polypyrrole or their derivatives.

A particularly preferred conducting polymer is illustrated in Formula I:

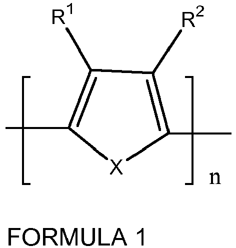

R¹ and R² of Formula 1 are chosen to prohibit polymerization at the β-site of the ring. It is most preferred that only α-site polymerization be allowed to proceed. Therefore, it is preferred that R¹ and R² are not hydrogen. More preferably, R¹ and R² are α-directors. Therefore, ether linkages are preferable over alkyl linkages. It is most preferred that the groups are small to avoid steric interferences. For these reasons R¹ and R² taken together as -O-(CH₂)₂-O- is most preferred.

In Formula 1, X is S or N and most preferable X is S.

R¹ and R² independently represent linear or branched C₁-C₁₆ alkyl or C₂-C₁₈ alkoxyalkyl; or are C₃-C₈ cycloalkyl, phenyl or benzyl which are unsubstituted or substituted by C₁-C₆ alkyl, C₁-C₆ alkoxy, halogen or OR³; or R¹ and R², taken together, are linear C₁-C₆ alkylene which is unsubstituted or substituted by C₁-C₆ alkyl, C₁-C₆ alkoxy, halogen, C₃-C₈ cycloalkyl, phenyl, benzyl, C₁-C₄ alkylphenyl, C₁-C₄ alkoxyphenyl, halophenyl, C₁-C₄alkylbenzyl, C₁-C₄alkoxybenzyl or halobenzyl, 5-, 6-, or 7- membered heterocyclic structure containing two oxygen elements. R³ preferably represents hydrogen, linear or branched C₁-C₁₆ alkyl or C₂-C₁₈ alkoxyalkyl; or are C₃-C₈ cycloalkyl, phenyl or benzyl which are unsubstituted or substituted by C₁-C₆ alkyl.

The conducting polymer is preferably chosen from polypyrroles, polyanilines, polythiophenes and polymers comprising repeating units of Formula I, particularly in combination with organic sulfonates. A particularly preferred polymer is 3,4-polyethylene dioxythiophene (PEDT).

The conducting polymer dispersion preferably comprises polymers with a particle size of no more than 100 nm. Above about 100 nm the film formed on the cathode is not adequate. It is preferable that the particles have a particle size of at least 0.5 nm. Below about 0.5 nm the particles have the potential of entering the interstitial surface into regions of poor dielectric. The particle size is preferably at least 5 to no more than 20 nm.

The solid electrolyte may includes at least one additive selected from fibers, dopants, crosslinkers, binders and nanoparticles wherein the additive comprises the reactive group of the solid electrolyte.

Particularly preferred nanoparticles are functionalized nanoparticles wherein the surface of the nanoparticles has been derivitized to include reactive groups.

The solid electrolyte may include fibers suitable for facilitating absorption of the liquid electrolyte. Particularly suitable fibers are fibers and nanofibers prepared from polymers such as polyacrylonitrile, cellulose, polyethylene oxide, polymethylmethacrylate, polyamide, polyaniline, polyvinyl alcohol, nanofibers derived from cellulose, nanofibers electrolspun from conducting polymers such as polyaniline, polythiophene, polypyrrole, etc. Fibers with a length of no more than 100 nm and diameter of no more than 50 nm are preferred. Microfibers or nanofibers prepared by milling can also be used. Hollow fibers and fibers with higher electrolyte absorption properties are preferred.

As typically employed in the art, various dopants can be incorporated into the polymer during the polymerization process. Dopants can be derived from various acids or salts, including aromatic sulfonic acids, aromatic polysulfonic acids, organic sulfonic acids with hydroxy groups, organic sulfonic acids with carboxylhydroxyl group, alicyclic sulfonic acids and benzoquinone sulfonic acids, benzene disulfonic acid, sulfosalicylic acid, sulfoisophthalic acid, camphorsulfonic acid, benzoquinone sulfonic acid, dodecylbenzenesulfonic acid, toluenesulfonic acid. Other suitable dopants include sulfoquinone, anthracenemonosulfonic acid, substituted naphthalenemonosulfonic acid, substituted benzenesulfonic acid or heterocyclic sulfonic acids as exemplified in U.S. Pat. No. 6,381,121, which is included herein by reference thereto. In one embodiment the dopants comprise a solid electrolyte reactive group.

Binders can be also incorporated into the conductive polymer layer if desired. Suitable binders include poly(vinyl acetate), polycarbonate, poly(vinyl butyrate), polyacrylates, polymethacrylates, polystyrene, polyacrylonitrile, poly(vinyl chloride), polybutadiene, polyisoprene, polyethers, polyesters, silicones, and pyrrole/acrylate, vinylacetate/acrylate and ethylene/vinyl acetate copolymers. In one embodiment the binder comprises a solid electrolyte reactive group.

The conductive polymer, binder, dopants or other components of the solid electrolyte comprise reactive groups such as epoxy, hydroxyl, amino, carboxylic, urethane, phosphate, silane, isocyanate, cyanate, nitro, peroxy, phosphio, phosphono, sulfonic acid, sulfone, nitro, acrylate, imide, amide, carboxyl, carboxylic anhydride, silane, oxazoline, (meth)acrylates, vinyls, maleates and maleimides itaconates, allyl alcohol esters, dicyclo-pentadiene-based unsaturations, unsaturated C₁₂-C₂₂ fatty esters or amides, carboxylic acid salts or quaternary ammonium salts which can be crosslinked with reactive groups on the liquid electrolyte. The liquid electrolyte comprises electrolytes solvents, anions, electrolytes and other additives with reactive groups such as epoxy, hydroxyl, amino, carboxylic, urethane, phosphate, silane, isocyanate, cyanate, nitro, peroxy, phosphio, phosphono, sulfonic acid, sulfone, nitro, acrylate, imide, amide, carboxyl, carboxylic anhydride, silane, oxazoline, (meth)acrylates, vinyls, maleates and maleimides itaconates, allyl alcohol esters, dicyclo-pentadiene-based unsaturations, unsaturated C₁₂-C₂₂ fatty esters or amides, carboxylic acid salts or quaternary ammonium salts which can be crosslinked with the reactive groups of the solid electrolyte. By crosslinking the liquid electrolyte with the solid electrolyte the electrolyte of the liquid electrolyte is still mobile yet the other components of the liquid electrolyte are more difficult to remove from the electrolyte thereby increasing the performance in higher temperatures.

At least one component of the liquid electrolyte comprises components with reactive groups otherwise, any conventionally known electrolytic solution may be employed. Preferably, however, the liquid electrolytic comprises solvents, such as non-aqueous solvents or aprotic solvents, an organic salt, cations, anions, electrolytes and other compounds. Particularly preferred additives for the liquid electrolyte include ethers, amides, oxazolidinones, nitriles, glycols, glymes, glycerols, lactones, carbonates, sulfones or polyols.

In the liquid electrolyte the organic salt refers to a salt in which at least one of the base and the acid that are constituent elements of the salt is organic. Gamma-butyrolactone or sulfolane, or a mixture thereof, are particularly suitable non-aqueous solvents with high reliability and a low specific resistance. Organic amine salts are suitable for demonstration of the invention. Organic amine salt refers to a salt of an organic amine and an organic or inorganic acid. Among organic amine salts, a salt of an organic amine and an organic acid is preferably used, and examples thereof include, triethylamine borodisalicylate, ethyldimethylamine phthalate, mono 1,2,3,4-tetramethylimidazolinium phthalate, mono 1,3-dimethyl-2-ethylimidazolinium phthalate, and a mixture of them.

Particularly preferred additives for the liquid electrolyte include polyols, glycerines, polyethylene glycols, poly(ethylene glycol) diacrylates, tetramethyl ammonium phthalates, γ-butyrolactones, ethylated γ-butyrolactones, propylated γ-butyrolactones, and β-propiolactones, dimethoxyethanes (DME), diglymes (diethylene glycol dimethyl ethers), triglymes (triethylene glycol dimethyl ethers), ethylene glycol diethyl ethers (DEE), and diethylene glycol diethyl ethers, polyethylene glycol dimethyl ethers, and at least one other organic solvent. Other additives include hyperbranched polyglycidol, hyperbranched polyalkylene glycols, poly(allyl glycidyl ether), poly(ethoxy ethyl glycidyl ether), copolymers of methyl glycidyl ether and allyl glycidyl ether, copolymers of methyl glycidyl ether and n-butyl glycidyl ether, hyperbranched copolymers comprising polymerizing glycidol of glycidyl ether monomer such as methyl glycidyl ether, poly(ethylene glycol) methyl ether acrylate, methoxypolyethylene glycol amine, O-(carboxymethyl)-*O*'-methylpolyethylene glycol, methoxy poly(ethylene glycol), polyethylene glycol monomethyl ether, methoxypolyethylene glycol maleimide, and poly(ethylene glycol) methyl ether methacrylate.

Examplary aprotic solvents in the liquid electrolyte include: ethers, amides, oxazolidinones, lactones, nitriles, carbonates, sulfones, and other organic solvents. Examplary ethers include: monoethers, such as ethylene glycol monobutyl ether, ethylene glycol monophenyl ether, tetrahydrofuran, and 3-methyltetrahydrofuran, etc.; diethers, such as ethylene glycol dimethyl ether, ethylene glycol diethyl ether, diethylene glycol monomethyl ether, and diethylene glycol monoethyl ether, etc.; and triethers, such as diethylene glycol dimethyl ether, and diethylene glycol diethyl ether, etc. Examples amides include: formamides, such as N-methylformamide, N,N-dimethylformamide, N-ethylformamide, and N,N-diethylformamide, etc.; acetamides, such as N-methylacetamide, N,N-dimethylacetamide, N-ethylacetamide, and N,N-diethylacetamide, etc.; propionamides, such as N,N-dimethylpropionamide, etc.; pyrrolidones, such as N-methylpyrrolidone, and N-ethylpyrrolidone, etc.; and hexamethyl phosphoryl amide, etc. Examples oxazolidinones include N-methyl-2-oxazolidinone, 3,5-dimethyl-2-oxazolidinone, etc. Examplary lactones include γ-butyrolactone, α-acetyl-y-butyrolactone, β-butyrolactone, γ-valerolactone, and δ-valerolactone, etc. Examplary nitriles include: acetonitrile, propionitrile, butyronitrile, acrylonitrile, methacrylonitrile, and benzonitrile, etc. Examplary carbonates include: ethylene carbonate, propylene carbonate, butylene carbonate, dimethyl carbonate, and diethyl carbonate, etc. Examplary sulfones include: sulfolane, and dimethyl sulfone, etc. Examples other organic solvents include: 1,3-dimethyl-2-imidazolidinone, dimethyl sulfoxide, aromatic solvents (toluene, xylene, etc.), and paraffin solvents (normal paraffin, isoparaffin, etc.), etc.

Aprotic solvents may be used alone or in combinations of two or more solvents in the liquid electrolyte. Among them, lactone and sulfone are preferred, γ-butyrolactone and sulfolane are more preferred, and γ-butyrolactone is particularly preferred.

In one embodiment the solvent has a boiling point of higher than 200°C and a dielectric constant of higher than 35.

The liquid electrolyte may contain a cation represented by Formula II and an anion.

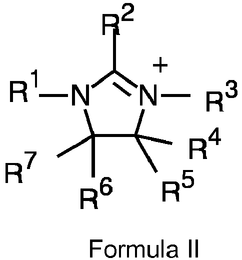

In Formula II, R¹ to R³ are each C₁₋₃ alkyl, and R⁴ to R⁷ are each C₁₋₃ alkyl or a hydrogen atom. Examples of the C₁₋₃ alkyl include: methyl, ethyl, n-propyl and isopropyl.

Exemplary cations include: 1,2,3,4-tetramethylimidazolinium, 1,3,4-trimethyl-2-ethylimidazolinium, 1,3-dimethyl-2,4-diethylimidazolinium, 1,2-dimethyl-3,4-diethylimidazolinium, 1-methyl-2,3,4-triethylimidazolinium, 1,2,3,4-tetraethyl-imidazolinium, 1,2,3-trimethylimidazolinium, 1,3-dimethyl-2-ethylimidazolinium, 1-ethyl-2,3-dimethylimidazolinium, and 1,2,3-triethylimidazolinium, etc. with 1,2,3,4-tetramethylimidazolinium and 1-ethyl-2,3-dimethylimidazolinium being more preferred.

Exemplary anions in the liquid electrolyte include the anions of various organic acids and/or inorganic acids commonly used in electrolytic solutions. In the case of an organic acid and/or inorganic acid having a valence of two or more, the anion is preferably a monoanion.

The organic acid and inorganic acid are exemplified by carboxylic acids, phenols, mono- and di-alkyl phosphates containing C₁₋₁₅ alkyl, sulfonic acids, inorganic acids, and others. Exemplary carboxylic acids include: C₂₋₁₅ polycarboxylic acid having a valence of 2 to 4 including: aliphatic polycarboxylic acids, such as saturated polycarboxylic acids, particularly oxalic acid, malonic acid, succinic acid, glutaric acid, adipic acid, pimelic acid, superic acid, azelaic acid, and sebacic acid, etc., and unsaturated polycarboxylic acids particularly maleic acid, fumaric acid, and itaconic acid, etc., aromatic polycarboxylic acids, such as phthalic acid, isophthalic acid, terephthalic acid, trimellitic acid, and pyromellitic acid, etc.; and S-containing polycarboxylic acids, such as thiodibropionic acid, etc; C₂₋₂₀ hydroxycarboxylic acid including aliphatic hydroxycarboxylic acids, such as glycolic acid, lactic acid, tartaric acid, and castor oil fatty acid, etc.; aromatic hydroxycarboxylic acid, such as salicylic acid, and mandelic acid, etc; C₁₋₃₀ monocarboxylic acid including aliphatic monocarboxylic acids, such as saturated monocarboxylic acids including formic acid, acetic acid, propionic acid, butyric acid, isobutyric acid, valeric acid, caproic acid, enanthic acid, caprylic acid, pelargonic acid, ularic acid, myristic acid, stearic acid and behenic acid, etc.), unsaturated monocarboxylic acids such as acrylic acid, methacrylic acid, crotonic acid and oleic acid, etc.; and aromatic monocarboxylic acids, such as benzoic acid, cinnamic acid, and naphthoic acid, etc. Exemplary phenols include monohydric phenol including phenols and naphthols including phenol, C₁₋₁₅ alkyl phenols such as cresol, xylenol, ethylphenol, n- or isopropylphenol, and isododecylphenol, etc., methoxyphenols such as eugenol, and guaiacol, etc., α-naphthol, β-naphthol, and cyclohexylphenol, etc., polyhydric phenols including catechol, resorcin, pyrogallol, phloroglucin, bisphenol A, bisphenol F, and bisphenol S, etc. Exemplary Mono- and di-alkyl phosphates containing C₁₋₁₅ alkyl include mono- and di-methyl phosphates, mono- and di-ethyl phosphates, mono- and di-isopropyl phosphates, mono- and di-butyl phosphates, mono- and di-(2-ethylhexyl) phosphates, mono- and di-isodecyl phosphates, etc. Exemplary sulfonic acids include: C₁₋₁₅alkyl benzenesulfonic acid such as p-toluenesulfonic acid, nonylbenzenesulfonic acid, and dodecylbenzenesulfonic acid, etc., sulfosalicylic acid, methanesulfonic acid, and trifluoromethanesulfonic acid, etc. Exemplary inorganic acids include: phosphoric acid, tetrafluoroboric acid, perchloric acid, hexafluorophosphoric acid, hexafluoroantimonic acid, and hexafluoroarsenic acid, etc. Other examples include imide anion of trifluoromethane sulfonylimide or the like, and methide anion of trifluoromethane sulfonylmethide or the like.

The electrolyte in the liquid electrolyte is represented by a combination of the cation and the anion, preferably including one from the following: 1,2,3,4-tetramethylimidazolinium/phthalate monoanion, 1-ethyl-2,3-dimethylimidazolinium/ phthalate monoanion, 1,2,3,4-tetramethylimidazolinium/maleate monoanion, 1-ethyl-2,3-dimethylimidazolinium cation/maleate monoanion, 1,2,3,4-tetramethylimidazolinium/ diethylphosphate anion, 1-ethyl-2,3-dimethylimidazolinium cation/diethylphosphate anion, 1,2,3,4-tetramethylimidazolinium/dibutylphosphate anion, 1-ethyl-2,3-dimethylimidazolinium cation/dibutylphosphate anion, 1,2,3,4-tetramethylimidazolinium/diisopropylphosphate anion, and 1-ethyl-2,3-dimethylimidazolinium cation/diisopropylphosphate anion and most preferably selected from 1,2,3,4-tetramethylimidazolinium/phthalate monoanion, 1-ethyl-2,3-dimethylimidazolinium/phthalatemonoanion, 1,2,3,4-tetramethylimidazolinium/maleate monoanion, and 1-ethyl-2,3-dimethylimidazolinium cation/maleate monoanion.

The concentration of the organic salt in the non-aqueous solvent is not limited to a particular concentration, and a usually employed concentration may appropriately be employed. The concentration may be for example 5 to 50 wt %.

A crosslinker is a material which forms an intermolecular bond with, or by, the reactive group of the solid electrolyte with a reactive group of the liquid electrolyte. Particularly preferred crosslinkers include silanes such as glycidyl silane and organofunctional silanes, epoxides, ethers such as glycidyl ether, epoxy crosslinkers and hydrophilic coupling agents.

The invention has been described with reference to preferred embodiments without limit thereto. One of skill in the art would realize additional embodiments and improvements which are within the scope of the invention as more specifically set forth in the claims appended hereto.

## Claims

1. A capacitor comprising:
a housing (24);
a wound capacitive couple (22) in said housing wherein said wound capacitive couple comprises:
an anode with a dielectric thereon;
a cathode;
an electrolyte between said cathode and said dielectric;
an anode lead (38) in electrical contact with said anode; and
a cathode lead (40) in electrical contact with said cathode;
a deck (28) secured to said housing and encasing said wound capacitive couple in said housing;
an anode press fit pin (32) on said deck and in electrical contact with said anode lead wherein said anode press fit pin comprises an anode riser (46) and an anode compression pin (47) extending from said anode riser opposite said deck;
a cathode press fit pin (34) on said deck and in electrical contact with said cathode lead wherein said cathode press fit pin comprises a cathode riser (46) and a cathode compression pin (47) extending from said cathode riser opposite said deck; and
a spacer (42) attached to said housing wherein said spacer comprises a central void wherein said anode press fit pin and said cathode press fit pin extend through said void and wherein said spacer extends away from said deck.

2. The capacitor of claim 1 wherein said spacer comprises a spacer body (52) and a lip (44) extending from said spacer body towards said deck.

3. The capacitor of claim 2 wherein said lip engages said deck.

4. The capacitor of claim 1, 2 or 3 wherein said spacer extends away from said deck a distance which is no more than extension of said riser away from said deck.

5. The capacitor of any preceding claim further comprising a sleeve encasing a portion of said housing and said spacer.

6. The capacitor of any preceding claim wherein said anode is a valve metal.

7. The capacitor of claim 6 wherein said valve metal is selected from the group consisting of tantalum, aluminum, niobium, titanium, zirconium, hafnium, alloys of these elements and conductive oxides thereof.

8. The capacitor of claim 7 wherein said valve metal is aluminum.

9. The capacitor of any preceding claim wherein said electrolyte comprises at least one material selected from the group consisting of solid electrolyte and liquid electrolyte.

10. The capacitor of claim 9 wherein said solid electrolyte is selected from the group consisting of manganese dioxide and a conductive polymer.

11. The capacitor of claim 10 wherein said conductive polymer is a 3,4-polyethylenethiophene.

12. An electronic device comprising the capacitor of any preceding claim.

## Patentansprüche

1. Kondensator, der aufweist:
ein Gehäuse (24);
ein aufgerolltes kapazitives Element (22) in dem genannten Gehäuse, wobei das genannte aufgerollte kapazitive Element aufweist:
eine Anode mit einem Dielektrikum an ihr;
eine Kathode;
einen Elektrolyten zwischen der genannten Kathode und dem genannten Dielektrikum;
einen Anodenleiter (38), der mit der genannten Anode in elektrischem Kontakt ist; und
einen Kathodenleiter (40), der mit der genannten Kathode in elektrischem Kontakt ist;
einen Deckel (28), der an dem genannten Gehäuse befestigt ist und das genannte aufgerollte kapazitive Element in dem genannten Gehäuse einschließt;
einen Anoden-Einpressstift (32) auf dem genannten Deckel und in elektrischem Kontakt mit dem genannten Anodenleiter, wobei der genannte Anoden-Einpressstift ein Anodenzwischenstück (46) und einen Anodendruckstift (47), der sich, dem genannten Deckel entgegengesetzt, von dem genannten Anodenzwischenstück erstreckt, aufweist;
einen Kathoden-Einpressstift (34) auf dem genannten Deckel und in elektrischem Kontakt mit dem genannten Kathodenleiter, wobei der genannte Kathoden-Einpressstift ein Kathodenzwischenstück (46) und einen Kathodendruckstift (47), der sich, dem genannten Deckel entgegengesetzt, von dem genannten Kathodenzwischenstück erstreckt, aufweist; und
einen Abstandsring (42), der an dem genannten Gehäuse angebracht ist, wobei der genannte Abstandsring einen mittigen Hohlraum aufweist, wobei der genannte Anoden-Einpressstift und der genannte Kathoden-Einpressstift sich durch den genannten Hohlraum erstrecken und wobei der genannte Abstandsring sich von dem genannten Deckel weg erstreckt.

2. Kondensator nach Anspruch 1, wobei der genannte Abstandsring einen Abstandsringkörper (52) und eine Lippe (44), die sich von dem genannten Abstandsringkörper zum genannten Deckel hin erstreckt, aufweist.

3. Kondensator nach Anspruch 2, wobei die genannte Lippe mit dem genannten Deckel in Eingriff ist.

4. Kondensator nach Anspruch 1, 2 oder 3, wobei der genannte Abstandsring sich um eine Entfernung, die nicht größer als die Erstreckung des genannten Zwischenstücks von dem genannten Deckel weg ist, von dem genannten Deckel weg erstreckt.

5. Kondensator nach einem der vorhergehenden Ansprüche, der ferner eine Buchse aufweist, die einen Teil des genannten Gehäuses und einen Teil des genannten Abstandsrings umschließt.

6. Kondensator nach einem der vorhergehenden Ansprüche, wobei die genannte Anode ein Ventilmetall ist.

7. Kondensator nach Anspruch 6, wobei das genannte Ventilmetall aus der Gruppe bestehend aus Tantal, Aluminium, Niob, Titan, Zirkonium, Hafnium, Legierungen aus diesen Elementen und leitfähigen Oxiden davon ausgewählt ist.

8. Kondensator nach Anspruch 7, wobei das genannte Ventilmetall Aluminium ist.

9. Kondensator nach einem der vorhergehenden Ansprüche, wobei der genannte Elektrolyt wenigstens ein aus der Gruppe bestehend aus festem Elektrolyt und flüssigem Elektrolyt ausgewähltes Material umfasst.

10. Kondensator nach Anspruch 9, wobei der genannte feste Elektrolyt aus der Gruppe bestehend aus Mangandioxid und einem leitfähigen Polymer ausgewählt ist.

11. Kondensator nach Anspruch 10, wobei das genannte leitfähige Polymer ein Poly-3,4-ethylendioxythiophen ist.

12. Elektronische Vorrichtung, die den Kondensator nach einem der vorhergehenden Ansprüche aufweist.

## Revendications

1. Condensateur comprenant :
un boîtier (24) ;
un couplage capacitif bobiné (22) dans ledit boîtier dans lequel ledit couplage capacitif bobiné comprend :
une anode recouverte d'un diélectrique ;
une cathode ;
un électrolyte entre ladite cathode et ledit diélectrique ;
un conducteur anodique (38) en contact électrique avec ladite anode ; et
un conducteur cathodique (40) en contact électrique avec ladite cathode ;
un pavé (28) fixé audit boîtier et enfermant ledit couplage capacitif bobiné dans ledit boîtier ;
une broche à emmanchement en force d'anode (32) sur ledit pavé et en contact électrique avec ledit conducteur d'anode dans lequel ladite broche a embranchement en force d'anode comprend une colonne d'anode (46) et une broche de compression d'anode (47) partant de ladite colonne d'anode opposée audit pavé ;
une broche à emmanchement en force de cathode (34) sur ledit pavé et en contact électrique avec ledit conducteur de cathode dans lequel ladite broche a embranchement en force de cathode comprend une colonne de cathode (46) et une broche de compression de cathode (47) partant de ladite colonne de cathode opposée audit pavé ; et
un espaceur (42) attaché audit boîtier, ledit espaceur comprenant un vide central traversé par ladite broche à emmanchement en force d'anode et ladite broche à emmanchement en force de cathode et ledit espaceur partant dudit pavé.

2. Condensateur selon la revendication 1 dans lequel ledit espaceur comprend un corps d'espaceur (52) et une lèvre (44) partant dudit corps d'espaceur vers ledit pavé.

3. Condensateur selon la revendication 1 dans lequel ladite lèvre s'engage avec ledit pavé.

4. Condensateur selon la revendication 1, 2 ou 3 dans lequel ledit espaceur s'étend depuis le pavé sur une distance qui ne dépasse par l'extension de ladite colonne partant dudit pavé.

5. Condensateur selon l'une quelconque des revendications précédentes comprenant en outre un manchon enfermant une partie dudit boîtier et dudit espaceur.

6. Condensateur selon l'une quelconque des revendications précédentes dans lequel ladite anode est un métal valve.

7. Condensateur selon la revendication 6 dans lequel ledit métal valve est sélectionné dans le groupe consistant en tantale, aluminium, niobium, titane, zirconium, hafnium, des alliages de ces éléments et leurs oxydes conducteurs.

8. Condensateur selon la revendication 7 dans lequel ledit métal valve est l'aluminium.

9. Condensateur selon l'une quelconque des revendications précédentes dans lequel ledit électrolyte comprend au moins un matériau sélectionné dans le groupe consistant en un électrolyte solide et un électrolyte liquide.

10. Condensateur selon la revendication 9 dans lequel ledit électrolyte solide est sélectionné dans le groupe consistant en dioxyde de manganèse et un polymère conducteur.

11. Condensateur selon la revendication 10 dans lequel ledit polymère conducteur est un 3,4-polyéthylènethiophène.

12. Dispositif électronique comprenant le condensateur selon l'une quelconque des revendications précédentes.
